# NEW EUROPEAN PATENT SPECIFICATION

(11) **EP 3 250 039 B2**
(45) Date of publication and mention of the opposition decision: **14.08.2024**
(45) Mention of the grant of the patent: 20.02.2019
(21) Application number: 16715358.4
(22) Date of filing: 25.01.2016
(51) Int. Cl.: A22C 21/00

(54) **DEVICE FOR MAKING A PREPARATORY INCISION LONGITUDINALLY OF AN ANIMAL EXTREMITY PART WITH FIRST AND SECOND BONES ARTICULATED BY A JOINT**
VORRICHTUNG ZUR HERSTELLUNG EINES VORBEREITENDEN EINSCHNITTS IN LÄNGSRICHTUNG EINES EXTREMITÄTENTEILS EINES TIERES MIT ERSTEN UND ZWEITEN ÜBER EIN GELENK VERBUNDENEN KNOCHEN
DISPOSITIF DE FABRICATION D'UNE INCISION PRÉPARATOIRE DANS LE SENS DE LA LONGUEUR D'UNE PARTIE D'EXTRÉMITÉ D'ANIMAL AVEC UN PREMIER ET UN SECOND OS ARTICULÉ PAR UNE ARTICULATION

(30) Priority: 27.01.2015 NL 2014197
(43) Date of publication of application: 06.12.2017
(73) Proprietor: Foodmate B.V., 3281 NJ Numansdorp (NL)
(72) Inventor: STOOKER, Dirk Cornelis, 3281 NJ Numansdorp (NL)
(74) Representative: V.O.
(86) International application number: PCT/NL2016/050054
(87) International publication number: WO 2016/122314

(56) References cited:
- EP-A1- 2 404 505
- EP-A2- 0 594 934
- WO-A2-00/59311

## Description

The invention relates to a device for automatically making a preparatory incision longitudinally of an animal extremity part with a first and a second bone articulated by a joint.

Removing meat from animal extremities, such as chicken legs, has become a largely automated process that eliminates to a large extend manual labor, and also improves safety and hygiene. Equipment for performing meat processing steps for removing meat from such animal parts is generally available, and one example is described in patent publication US 8808068.

As explained in patent publication US 5961383 it is often still necessary to perform certain preparatory cuts manually, before meat removal can be automatically performed successfully by a deboning device. One such preparatory cuts, often referred to as a J-cut, involves an incision longitudinally of an animal extremity part with a first and a second bone articulated by a joint. Such manual labor to effect such J-cuts, clearly is a nuisance with the present day demands in meat processing speed, safety and hygiene.

Accordingly it is an object of the present invention to propose a device for automatically making a preparatory incision longitudinally of an animal extremity part with a first and a second bone articulated by a joint. In a more general sense it is thus an object of the invention to overcome or reduce at least one of the disadvantages of the prior art. It is also an object of the present invention to provide alternative solutions which are less cumbersome in assembly and operation and which moreover can be made relatively inexpensively. Alternatively it is an object of the invention to at least provide a useful alternative.

To this end the invention provides a device as defined in one or more of the appended claims having the advantages sought over the prior art.

EP0594934A2 discloses a poultry leg deboning apparatus including a cutting machine. The cutting machine has a cutting blade that can be moved in a vertical direction by a first air cylinder, and in a longitudinal direction by a second air cylinder.

Another cutting machine for slitting a chicken leg is disclosed in EP2404505 A1.

Further advantageous aspects of the invention will become clear from the appended description and in reference to the accompanying drawings, in which:
Figure 1 is a partial perspective view of a meat processing machine including a device according to the present invention, and forming an incision station therein;
Figures 2A and 2B are front perspective views of a cutting unit of the device in Figure 1 in a receiving (2A), and a cutting position (2B);
Figures 3A and 3B are perspective views from behind of the cutting unit of Figures 2A and 2B, respectively;
Figure 4 is an explosion view of the cutting unit;
Figure 5 is a further of the cutting unit in assembled condition;
Figure 6 is a front elevation of the cutting unit showing its receiving position in dotted lines;
Figure 7 is a cross section according to the line A-A in Figure 5;
Figure 8 is a perspective view of the incision station of Figure 1 with the cutting unit in a receiving position for receiving an animal extremity part;
Figure 9 is a perspective detail view of the cutting unit as shown in Figure 8;
Figure 10 is a further detail view of the cutting unit in its receiving position, but now with a chicken leg received therein;
Figure 11 is a perspective view similar to Figure 8, but with the cutting unit in its cutting position;
Figure 12 is another perspective view similar to Figures 8 and 11, but now with the cutting station shown towards an end of its cutting cycle;
Figure 13 is a perspective detail view of the cutting unit as shown in Figure 12;
Figure 14 is a perspective detail view similar to Figure 13, but now with a chicken leg in position that is being cut along its thigh bone, which is suspended below the knee joint;
Figure 15 is a further perspective view similar to Figure 14, but now after completion of the cutting cycle;
Figure 16 is a perspective view of an alternative device according to the present invention for simultaneously cutting both legs of a single animal or bird;
Figures 17A and 17B are perspective front and rear views of a double cutting unit isolated from the device of Figure 16;
Figure 18 is an explosion view of the double cutting unit of Figures 17A and 17B;
Figure 19 is a further explosion view of a main body subassembly still in an assembled form in Figure 18;
Figure 20 is an enlarged perspective view of the main body subassembly of Figure 19 in an assembled form;
Figure 21 is a further perspective view of the entire double cutting unit in assembled form;
Figure 22 is a front elevation of the double cutting unit of Figure 21, but illustrated together with an associated shackle for carrying a pair of animal legs;
Figure 23 is a side elevation of the cutting unit of Figure 22, shown here in its start position ready to receive a pair of chicken legs;
Figure 24 is a side elevation similar to Figure 23 showing the cutting unit in an initially position for starting a straight cut along a drumstick bone of a chicken leg; and
Figure 25 is a further side view showing the cutting unit in a final J-cut position.

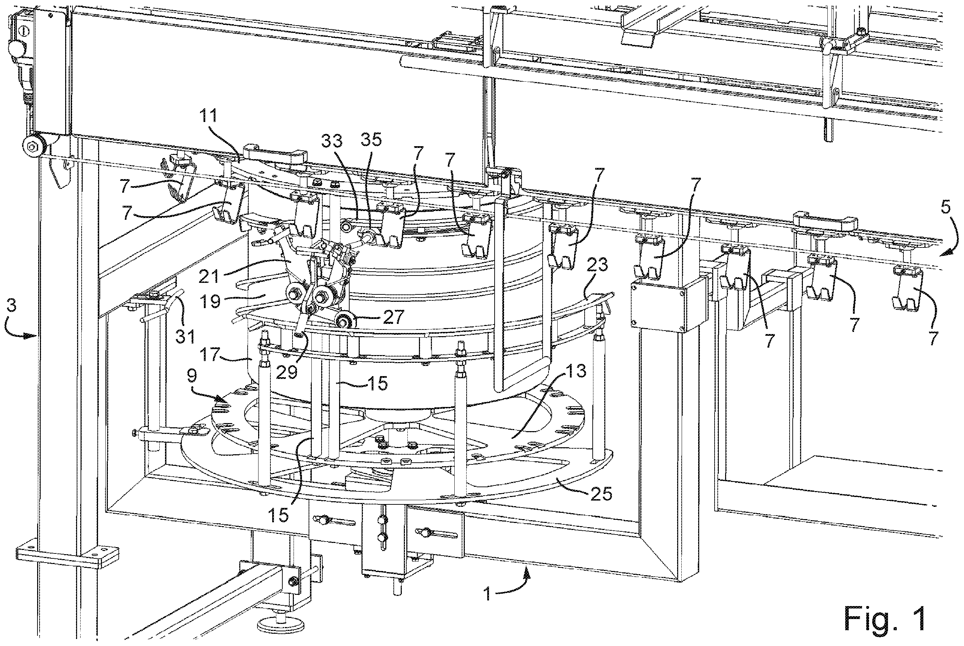

In Figure 1 an incision station 1 for making a longitudinal incision in body extremity parts of a slaughtered animal is shown as part of a meat processing machine 3. The station 1 is positioned to be joined by an overhead conveyor 5 of the meat processing machine 3. The overhead conveyor 5 has a plurality of suspended hooks 7 for carrying a hock knuckle of for example a poultry leg, which then has its thigh bone connected by a knee joint to its drumstick bone. Hanging downwardly from the relevant hook 7. The conveyor 5 is directed through an end loop by a rotatable carousel 9 of the unit 1. The carousel 9 includes an upper disc 11 and a lower disk 13. Pairs of parallel shafts 15 extend between the upper and lower disks 11, 13 at regular intervals about a periphery defined by the outer perimeters of the upper and lower disks 11, 13. For clarity only one pair of parallel shafts 15 is shown in Figure 1, but the position where similar pairs of shafts would be positioned is indicated about the periphery of the lower disk 13. The carousel 9, made up by the assembly of parallel shafts 15, upper and lowerer disks 11, 13 is mounted for rotation about a stationary drum 17. The stationary drum 17 has a primary guide track 19 about its perimeter, which is in engagement with a cutting unit 21. The cutting unit 21 is also vertically slidingly engaged on the pair of parallel shafts 15, for up and down movement. This up and down movement is induced by a curveous path defined by the primary guide track 19. The primary guide track 19 is held stationary, while the carousel 9 revolves about it.

Outwardly of the carousel 9 is positioned a stationary secondary guide track 23, which is supported from a stationary base plate 25, and extends about a perimeter of the carousel 9. The secondary guide track 23 supports a follower wheel 27, and a positioner roller 29 of the cutting unit 21 during a portion of its revolution. An auxiliary guide 31 is positioned to engage the positioner roller 29 at a later portion of its revolution about the stationary drum 17. The auxiliary guide 31 is also supported from the stationary base plate 25, and may be further attached to a frame of the incision station 1 and/or the meat processing machine 3. On the stationary drum 17, inside of the carousel 9, a knife adjuster guide track 33 is positioned above the primary guide track 19 to guide a further follower wheel 35 of the cutting unit 21. The operation of the cutting unit 21 will be explained herein below in reference to other Figures than Figure 1.

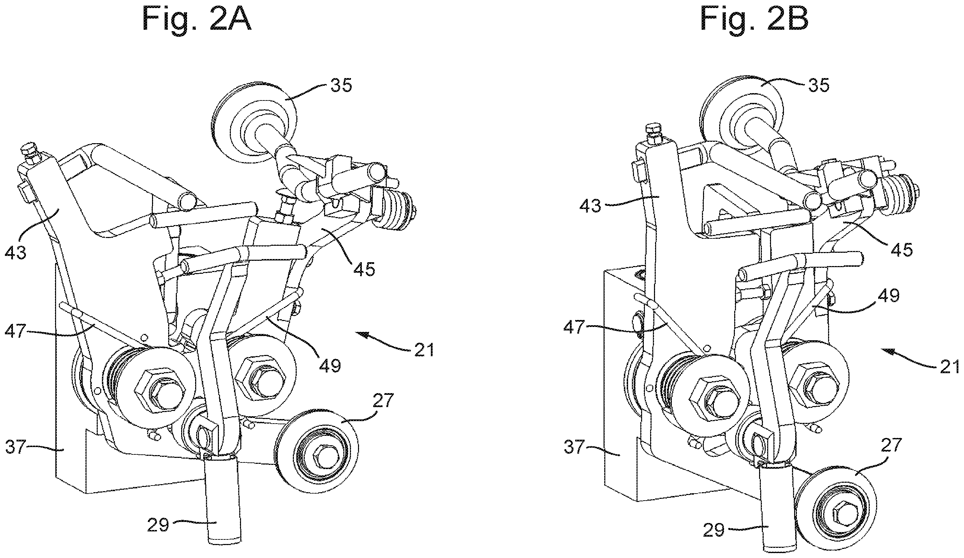

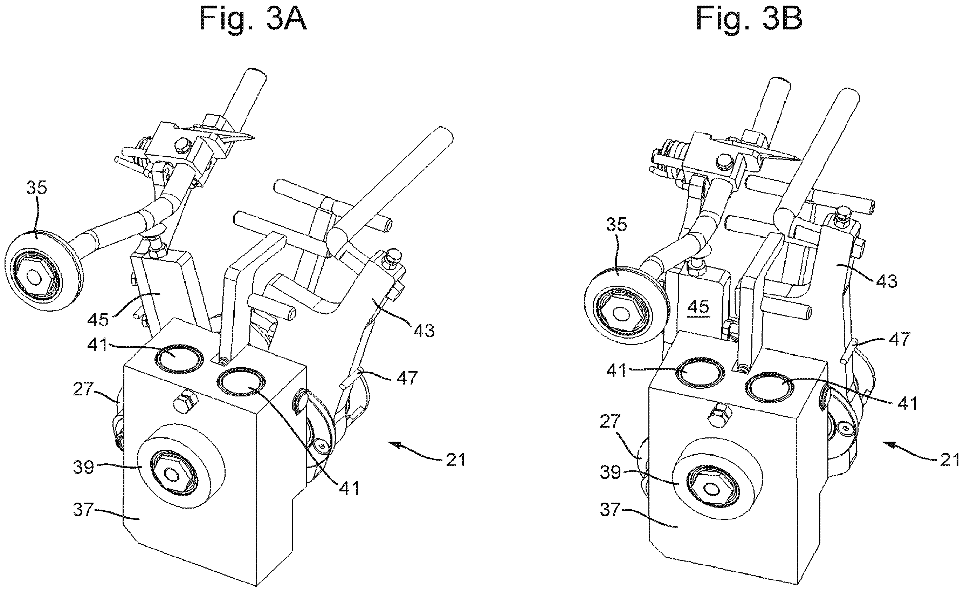

Figures 2A and 2B show the cutting unit 21 in an open position (Fig. 2A), and a closed portion (Figure 2B). In Figure 3A the cutting unit 21 is shown from an opposite direction in the open position of Figure 2A, while Figure 3B corresponds to a reverse view of Figure 2B.

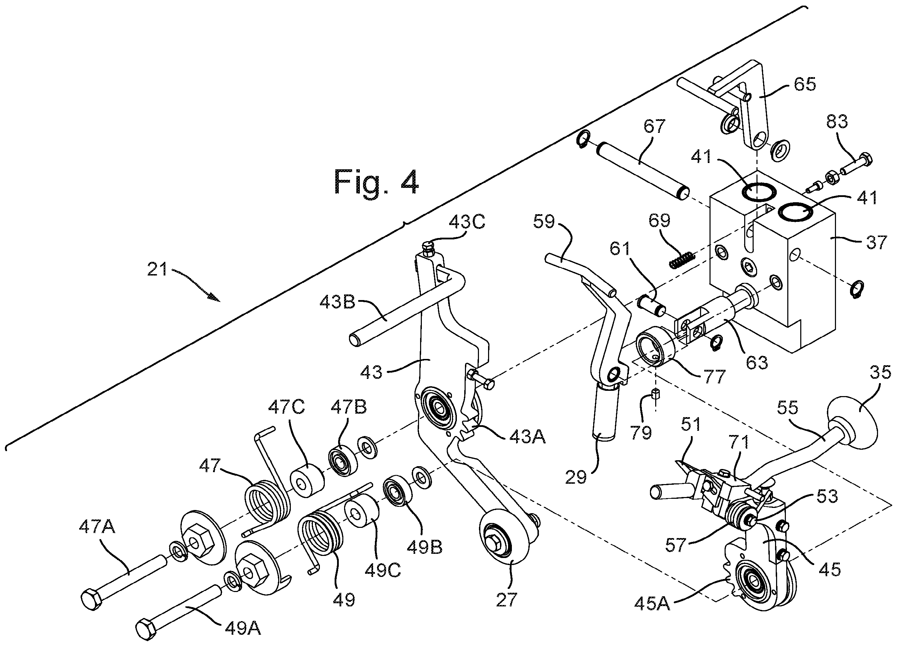

The cutting unit 21 has a slide body 37, which as best seen in Figures 3A, 3B, has a guide roller 39, which in use will be engaged by the primary guide track 19 (visible in Figure 1). The slide body 37 has a pair of vertically extending through bores 41 for receiving therein the paired parallel shafts 15 of the carousel 9. As best seen in Figures 2A, 2B, and the exploded view of Figure 4, a guide bar 43, and knife arm 45 are pivotally mounted to a front side of the slide body 37. The guide bar 43 and the knife arm 45 are each urged towards one another by a respective torsion springs 47, 49. Movement of the guide bar 43 and the knife arm 45 is controlled to be simultaneously by means of interengaging chain wheel segments, 43A and 45A respectively. A cutting knife 51 is pivotally mounted to the knife arm 45 for directing its cutting edge about pivot shaft 53. The pivoting movement of the cutting knife 51 is controlled by the further following wheel 35 acting on a knife adjuster lever 55, and by a return spring 57 biasing the cutting knife 51 to one of its angular end positions.

The positioner roller 29 controls a leg positioner arm 59, which pivots inwardly and outwardly from the slide body 37 about a pivot shaft 61 engaged in a fork 63 attached to the slide body 37. Further mounted on the slide block 37 is a knuckle support arm 65, which pivots about a shaft 67. The knuckle support arm 65 is urged outwardly by a compression spring 69.

For completeness sake it is to be understood that the guide bar 43 is pivoted to the slide body 37 by a pivot shaft 47A about bearing 47B, while knife arm 45 is pivoted about pivot shaft 49A, and about bearing 49B. The torsion spring 47 rests on a bush 47C, and the torsion spring 49 rests on a bush 49C. For clarity sundry fastener parts, general commodity items, and other ancillaries which are shown in Figure 4 will be readily recognized by the skilled reader, and do not require any detailed reference in this description.

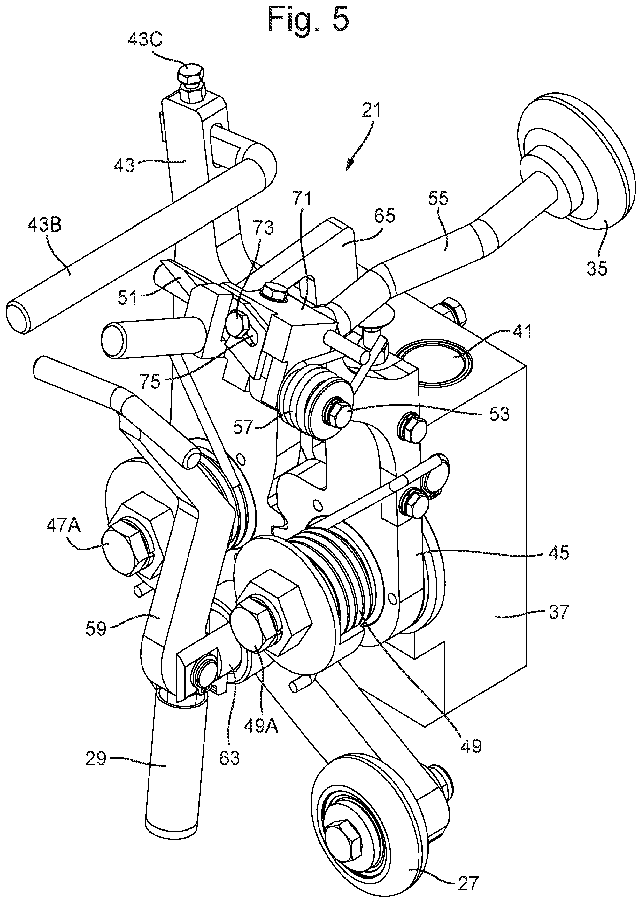

Figure 5 shows the assembled cutting unit 21 on an enlarged scale. The guide bar 43 includes a support rod 43B, which urges an animal leg part (not shown in Figure 5) towards the cutting knife 51. This support rod 43B is adjustable by a set screw 43C. The cutting knife 51 is also mounted to be adjustable for reach, and this is accomplished by a knife holder 71 which is fixedly connected to the knife adjuster lever 55, and by a set screw 73 mounted to the knife holder 71 and engaged in an elongate aperture 75 of the cutting knife 51.

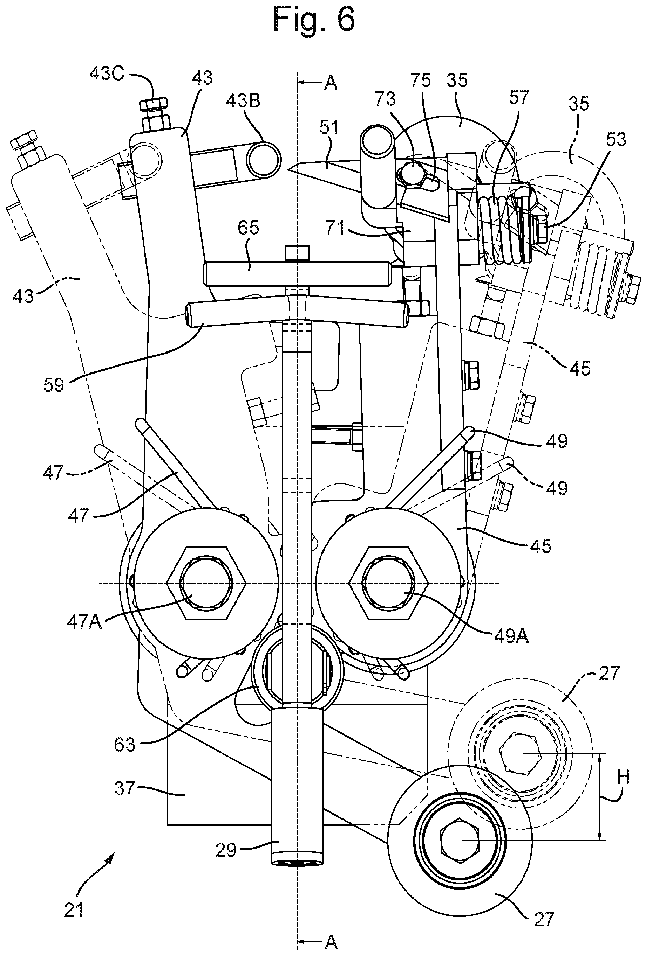

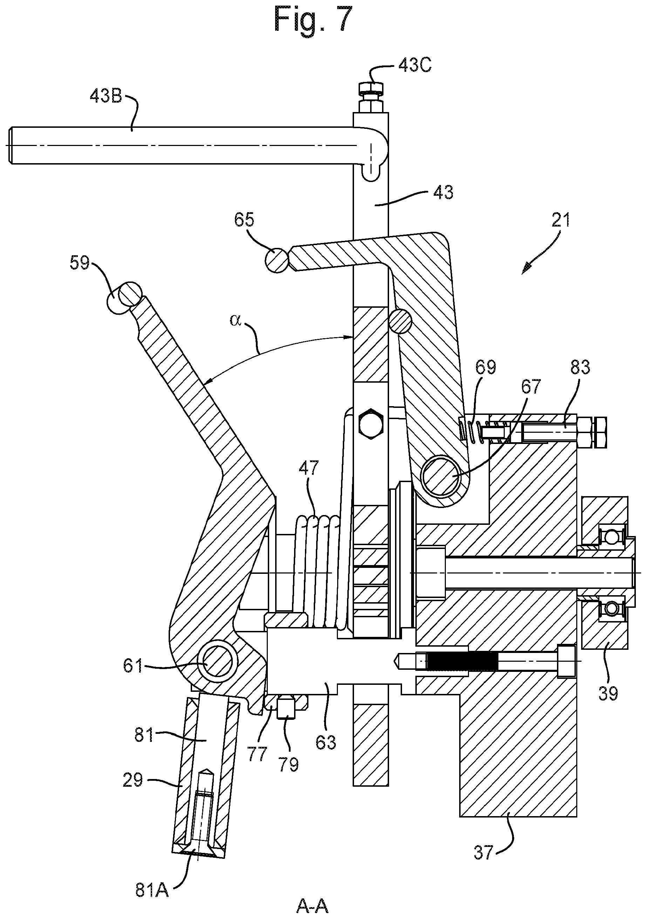

Figure 6 is a front elevation of the cutting unit 21 of Figures 3A - 5. In dotted lines the spread position of the guide bar 43 and knife arm 45 is shown, which results from the follower wheel 27 being lifted by an amount H. This lifting of the follower wheel 27 is accomplished by the stationary secondary guide track 23 shown in Figure 1. Figure 7 shows a cross section of the cutting unit 21 according to the line A-A of Figure 6. The leg positioner arm 59 in Figure 7 is shown in its outermost position of pivoting about pivot shaft 61. In this position the angle α is about 34°, and is adjustable by an adjustment ring 77 fitted about the fork 63 and adjustably fixed by set screw 79. The leg positioner arm 59 can be moved inwardly by positioner roller 29, which is rotatable about a shaft 81 which is part of the leg positioner arm 59. The positioner roller 29 is retained to the shaft 81 in a conventional manner by a screw fastener 81A. It is further seen in Figure 7 that the tension of compression spring 69 is adjustable by adjustment screw 83.

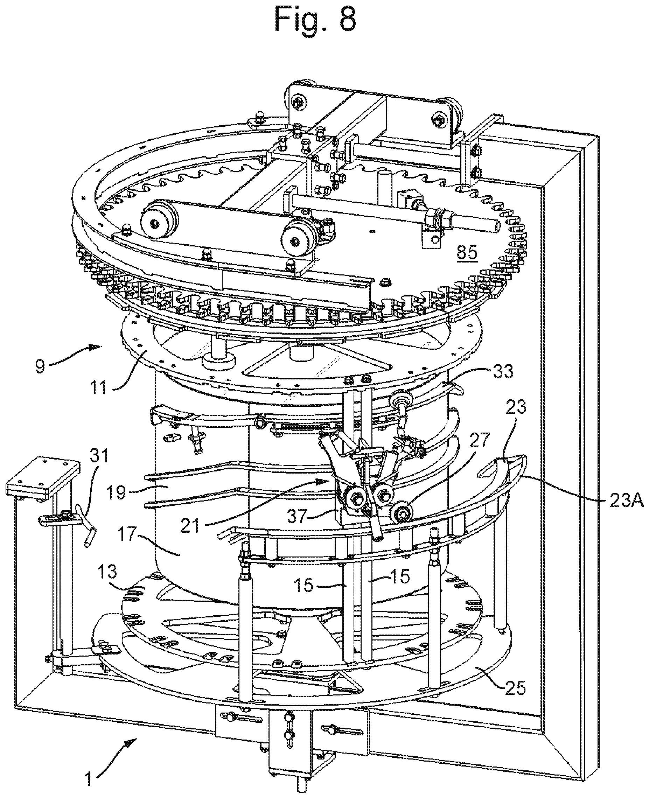

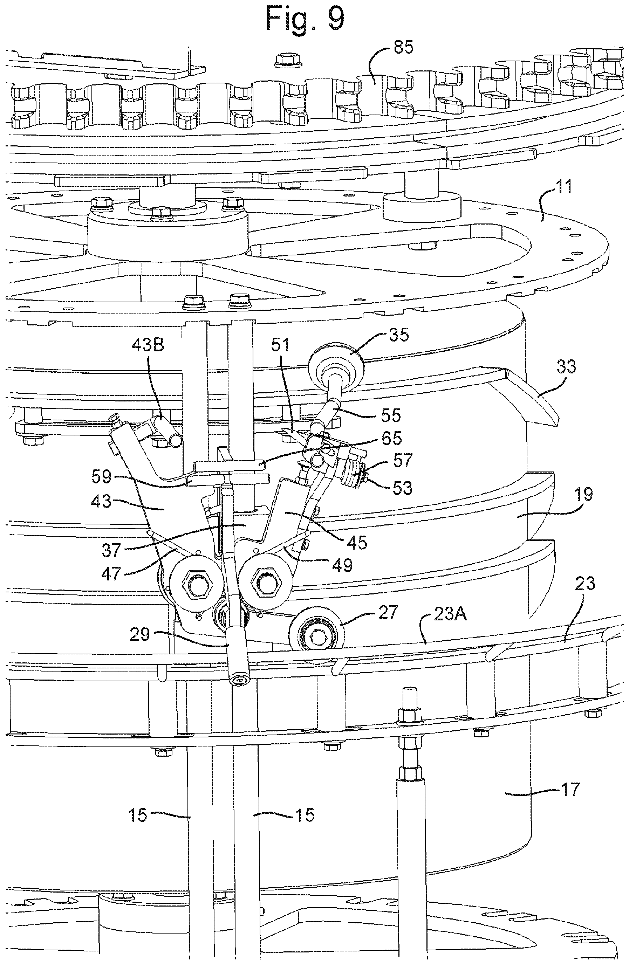

As now shown in Figures 8 and 9 the rotatable carousel 9 is associated with a chain wheel 85 that cooperates with the overhead conveyor 5 shown in Figure 1. The suspended hooks 7 overhead conveyor chain 5 have been deleted from Figures 8 and 9 for clarity, but the hooks each join the chain wheel 85 at the location where one cutting unit 21 is shown on the carousel 9. Again for clarity only one pair of parallel shafts 15 and one cutting unit 21 are shown in Figures 8 and 9. In practice the entire circumstance of the carousel 9 will be formed by pairs of parallel shafts, each pair being associated with one cutting unit. As shown in Figures 8 and 9 the follower wheel 27 is rolling over the stationary secondary guide track 23, and thereby is lifted over the distance H as shown in Figure 6. The further follower wheel 35 is also guided in a raised position by the knife adjuster guide track 33. With the guide bar 43 and the knife arm 45 spread by the secondary guide track 23, via follower wheel 27, a chicken leg, or like, suspended from its relevant hook (7 in Figure 1) can easily enter between the support rod 43B and the cutting knife 51. The leg positioner arm 59 is kept in its innermost position by the positioner roller 29 riding over an outer edge 23A of the secondary guide track 23.

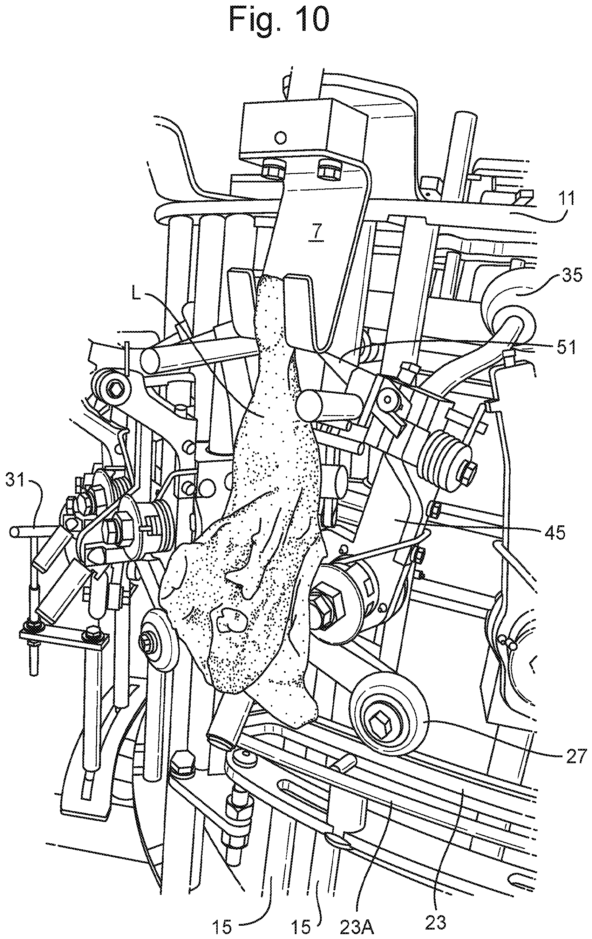

Figure 10 is a detail view of the carousel 9, with one of the cutting units 21 just having received an animal leg, such as a chicken leg L. The leg L is suspended by its hock knuckle from which the drumstick bone hangs with the knee joint downwardly. The thigh bone is suspended below the knee joint. The follower wheel 27 is still supported on secondary guide track 23 and the cutting knife 51 has not yet entered the meat that surrounds the drumstick bone.

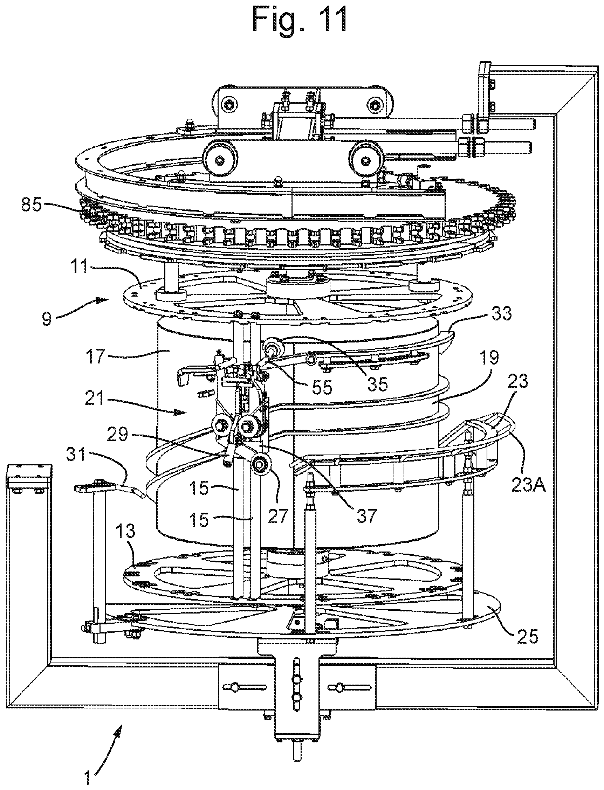

Figure 11 is an illustration of the incision station 1 somewhat similar to Figure 8, but with the cutting unit 21 in a more advanced position about the stationary drum 17. In this position of the cutting unit 21 the follower wheel 27 has left the secondary guide track 23. As a result the torsion springs 47 and 49 can now bias the guide bar 43 and knife arm 45 towards the chicken leg (not shown in Figure 11) that is suspended from the overhead conveyor chain that extends about the chain wheel 85 (again not shown for clarity). By this action the cutting knife 51 will enter the meat that surrounds the drumstick bone. In the position of the cutting unit 21 shown in Figure 11 the primary track 19 has also caused the slide body 37 to be moved downwardly of the associated pair of parallel shafts 15. Also visible in Figure 11 the positioner roller 29 has also left the secondary guide track's outer edge 23A and will now only be retained between the chicken leg and the front of the guide bar 43 and knife arm 45. The further follower wheel 35, which controls the position of the knife adjuster lever 55, in Figure 11 is still supported on the knife adjuster guide track 33, but has been adjusted by the return spring 57 (see Figures 4 - 6) to follow the downward slope of the knife adjuster guide track 33.

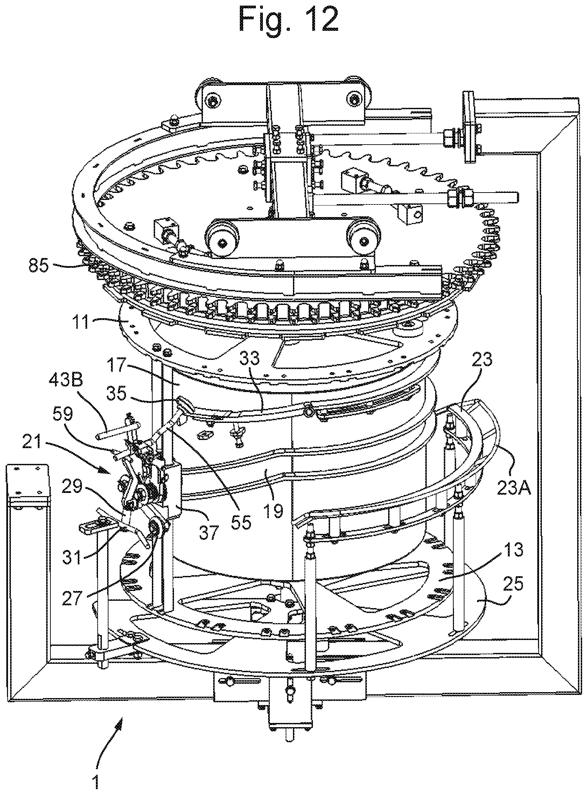

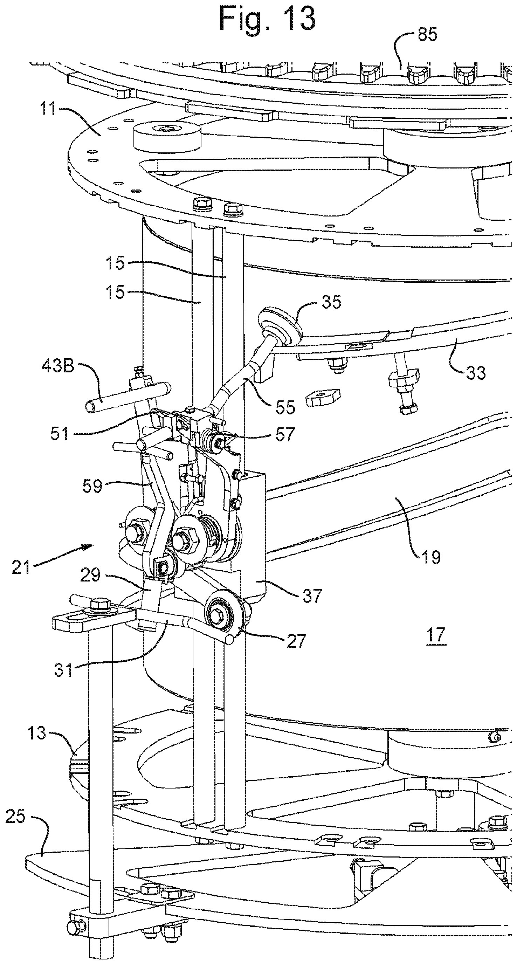

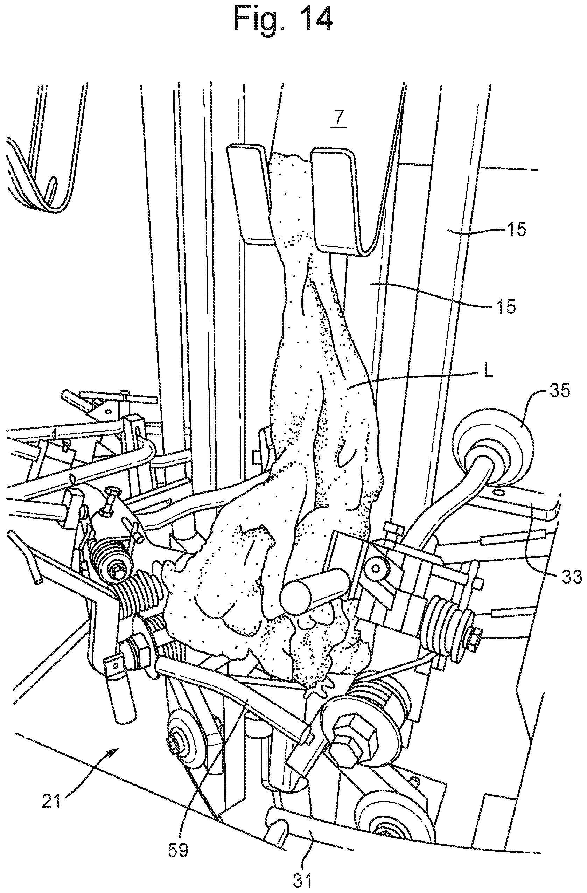

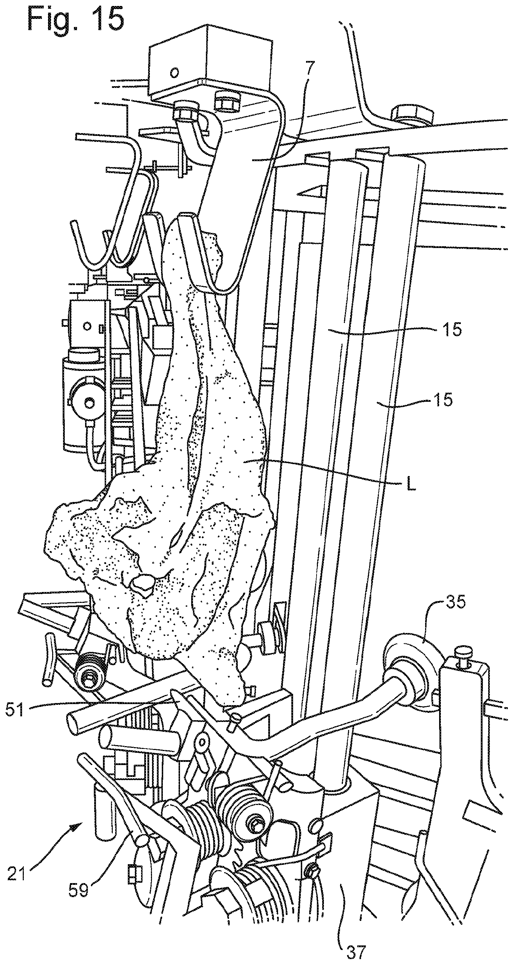

Figure 12 is again an illustration somewhat similar to Figures 8 and 11, but with the cutting unit 21 in a still further advanced position about the stationary drum 17. Figure 13 is a view similar to Figure 12, but on an enlarged scale, while Figures 14 and 15 show similar positions of the cutting unit 21 in relation to a chicken leg L engaged thereby. In Figures 12 and 13 it is seen that the slide body 37 has been moved further downwardly by the downwardly sloping primary guide track 19. This downward movement of the cutting knife 51 through the meat of the chicken leg which remains suspended at the level dictated by the chain wheel 85. The further follower wheel 35 now is also at the lowest end of knife adjuster track 33. Because the slope of knife adjuster track 33 diverges with respect to the slope of primary guide track 19, the cutting knife 51 through adjuster lever 55 is still moved towards one of its extreme and positions against the action of return spring 57. The positioner roller 29 is now engaging the auxiliary guide 31 and moved inwardly. Inward movement of the positioner roller 29 results in the leg positioner arm 59 to be moved to its outermost position (as shown in Figure 7). This will guide the thigh bone in respect of the cutting knife 51 after this has passed the knee joint of the chicken leg L.

The end of the cutting operation is shown in more detail in Figures 14 and 15. In Figure 14 the cutting knife 51 is still in the meat portion surrounding the thigh bone of the chicken leg L. In figure 15 the cutting cycle is finished and the cutting knife 51 has moved to a position below the chicken leg L. It is also seen in Figure 15 that the further follower wheel 35 has moved beyond the knife adjuster guide track 33, whereby the cutting knife 51 is moved to an opposite extreme end position by the return spring 57.

Explained in reference to Figures 1 to 15 is an incision station 1 for dealing with only a single type of poultry legs, in this case the left one of the poultry legs. For dealing with the right hand poultry legs a similar incision station would be employed with cutting units that are mirrored versions of the cutting unit 21 described above.

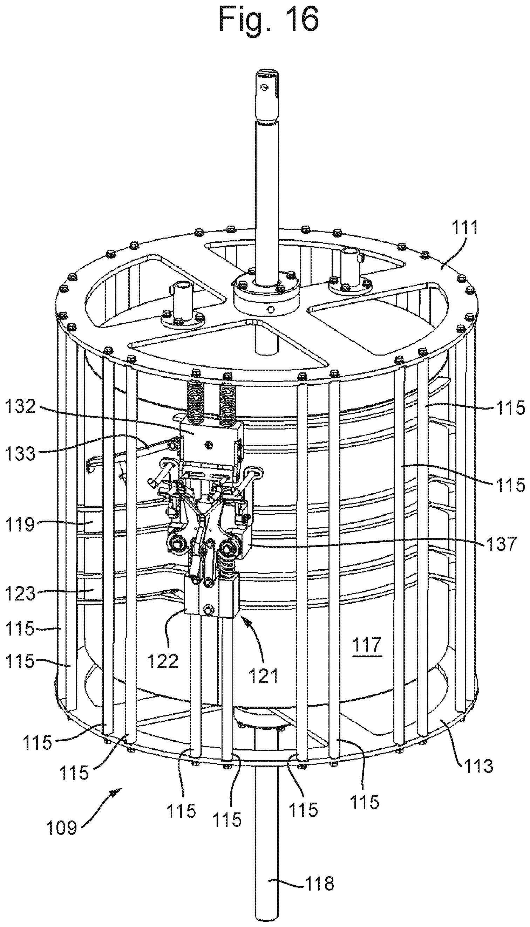

In a further embodiment of the invention as will now be explained in reference to Figures 16 to 25 both left hand and right hand legs of a single item of poultry can be cut lengthwise at the same time by an alternative cutting unit. In Figure 16 the carousel 109 of a modified incision station is shown. Parts, in as far as similar to those of the embodiment of Figures 1-15, will be referred to by similar reference numerals differing by the addition of a full "100". The carousel 109 is again composed of an upper disk 111, a lower disk 113 and a plurality of pairs of parallel shafts 115 extending axially therebetween. The carousel 109 thus shaped as a "cage" rotates about a stationary drum 117, which is supported on a stationary shaft 118, about which the upper and lower disks 111, 113 are rotatable journalled. Slidably arranged on each pair of shafts 115 is a cutting unit 121 of which only one is shown in Figure 16. The cutting unit 121 has a main slide body 137, which is guided for up and down movement by a primary guide track 119. The cutting unit 121 further includes a secondary slide body 122 that engages a secondary guide track 123, and a knife adjuster slide body 132 engaging a knife adjuster guide track 133.

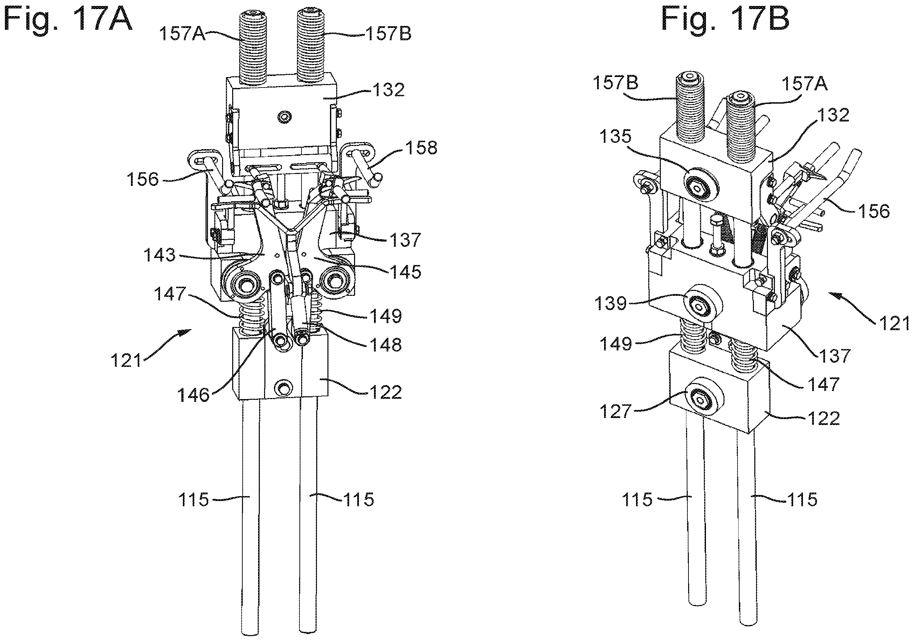

Figure 17A is a front perspective view of the cutting unit 121 of Figure 16 and Figure 17B is a view of the same unit from behind. In the rear view of Figure 17B it is visible that the main slide body 137 has a guide roller 139 with which it engages the primary guide track 119. The secondary slide body 122 on its rear side is provided with a follower wheel 127 for engaging the secondary guide track 123. As also illustrated in Figure 17B the knife adjuster slide body 132 has further follower wheel 135 on its reverse side for engaging the knife adjuster guide track 133 of the stationary drum 117 (see Figure 16).

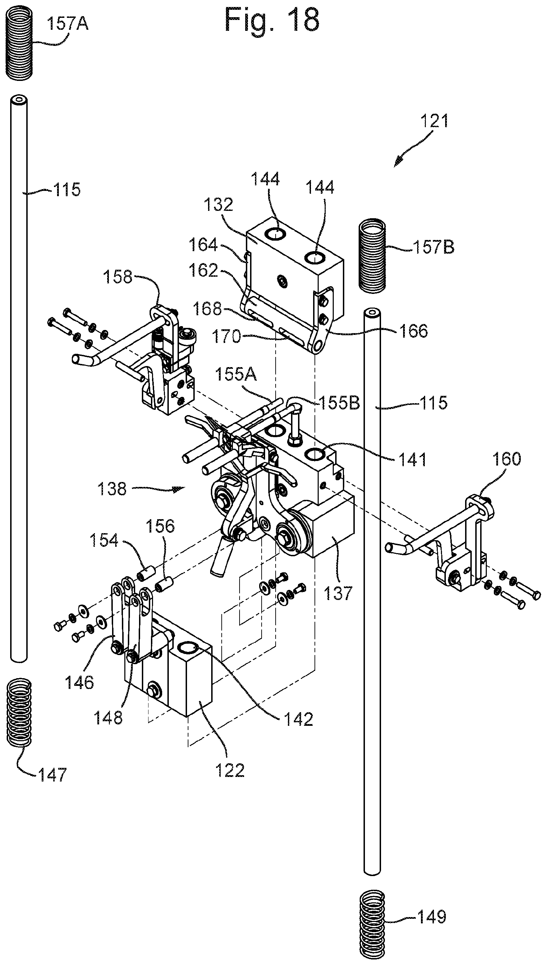

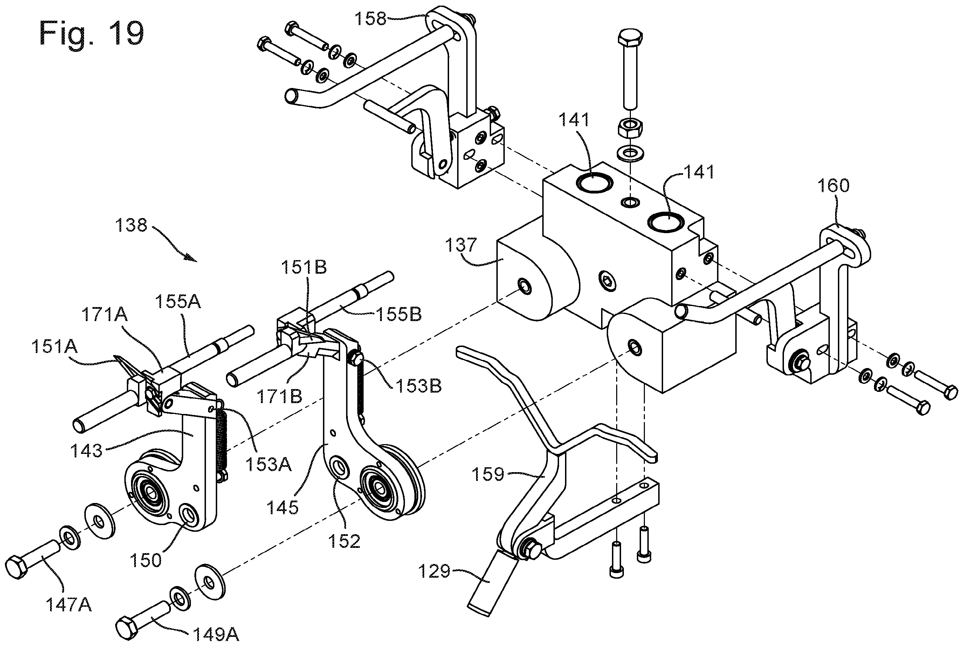

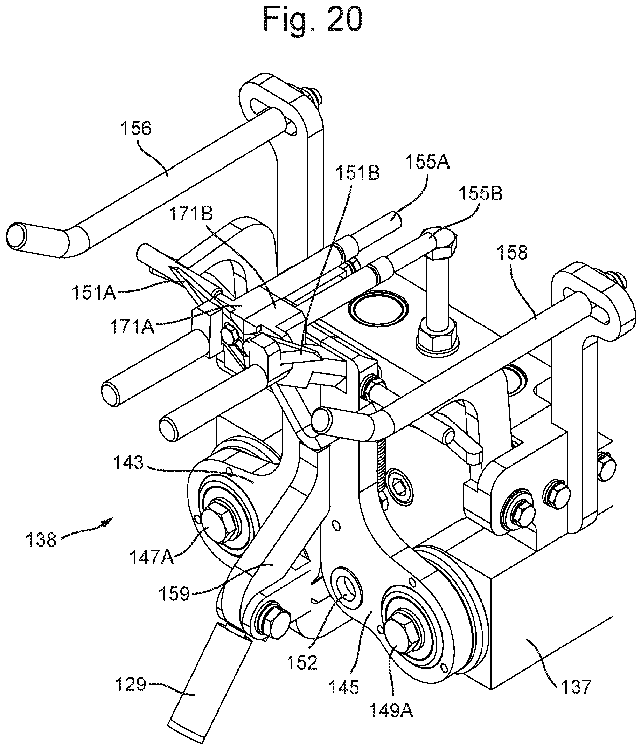

Figure 18 shows an exploded view of the cutting unit 121 of Figures 17A and 17B. The main slide body 137 together with components attached thereto forms a subassembly 138 of which a further exploded view is shown in Figure 19. As shown in Figure 18 the secondary slide body 122 has a pair of vertically extending though bores 142 similar to a pair of through bores 141 in the main sliding body 137. The through bores 141, 142 are for receiving the shafts 115 therein. Also the upper knife adjuster slide body 132 has such a pair of through bores 144 by which it is engaged for sliding along the shafts 115. Compression springs 147 and 149 are also positioned over the shafts 115 and are interposed between the main slide body 137 and the secondary slide body 122 to bias the secondary slide body 122 away from the main slide body 137. The secondary slide body 122 is connected to left hand and right hand knife assemblies 143, 145 by means of left hand and right hand levers 146, 148. One end of each of these levers 146, 148 is pivoted to the secondary slide block 122, while the upper ends are hingedly connected to eccentric openings 150,152 is by means of shafts 154, 156. Attached to opposite lateral sides of the main sliding body 137 are respective left hand and right hand guide assemblies 158,160 for engaging the outside of an animal leg. The upper knife adjuster slide body 132 has a lever hinge shaft 162 pivoted between opposite hinge strips 164,166. The lever hinge shaft 162 has axially extending left hand and right hand slots 168,170 for receiving therein knife adjuster levers 155A,155B. Compression springs 157A,157B engaging over the respective shafts 115 urge the knife adjuster sliding body 132 towards the main sliding body 137. As shown in more detail in Figure 19 the left hand knife assembly 143 has a cutting knife 151A mounted to a knife holder 171A which is pivotally mounted about pivot shaft 153A. Extending from the knife holder 171A is a knife adjuster lever 155A. The knife adjuster lever 155A has its free end engaged in the left hand slot 168 of the lever hinge shaft 162. A similar arrangement applies to the right hand knife assembly 145 where the respective knife holder 171B, holding cutting knife 151B, is pivoted about pivot shaft 153B. A respective knife adjuster lever 155B has its free end engaged in the right hand slot 170 of the lever hinge shaft 162. Figure 20 provides a clearer view of the assembled main slide subassembly 138.

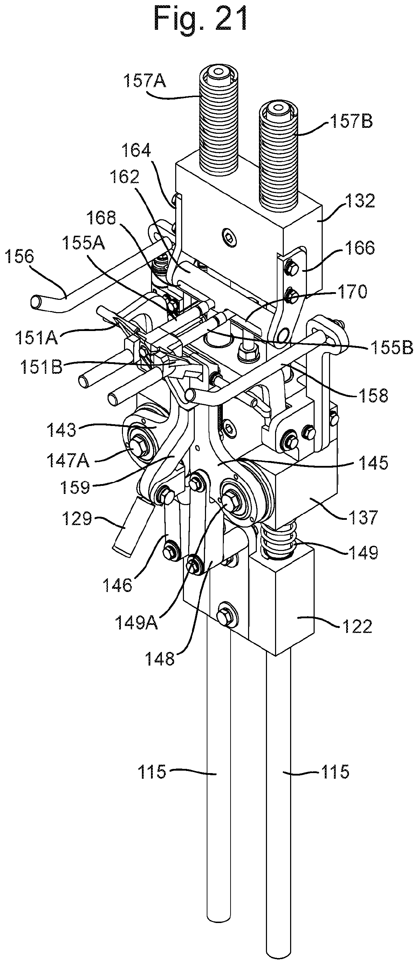

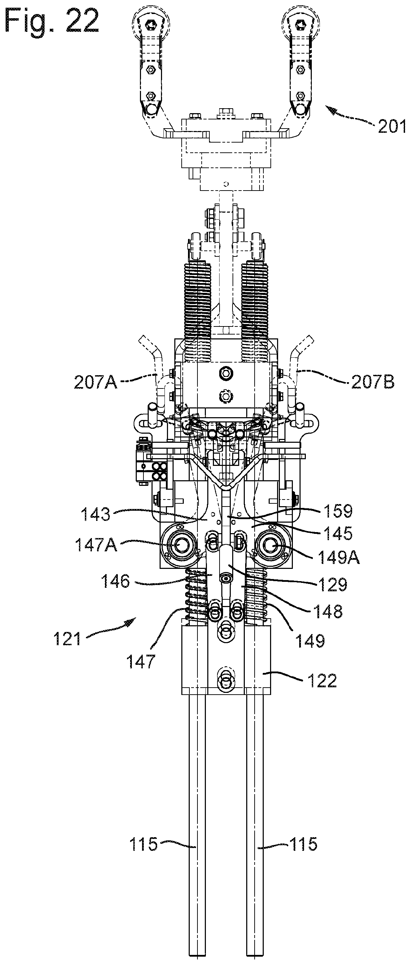

As will be recognized in the assembled arrangement of the cutting unit 121, shown in Figure 21, the free ends of the knife adjuster levers 155A,155B are engaged into a respective slot 168, 170 of the lever hinge shaft 162. Relative downward movement of the knife adjuster sliding body 132 with respect to the main sliding body 137 will result in a slanted position of the knife adjuster levers 155A, 155B. As a result the orientation of the cutting knifes 151A, 151B will thereby be adjusted about the respective pivot shafts 153A, 153B. Relative movement of the secondary sliding body 122 in an upward direction with respect to the main sliding body 137 will result in the left and right hand knife assemblies 143,145 to be spread outwardly, so that the outwardly directed cutting knifes 151A, 151B will engage the meat surrounding the drumstick bone of poultry legs being held against opposite left and right hand guide assemblies 156,158. This action will be further explained in reference to Figures 22-25.

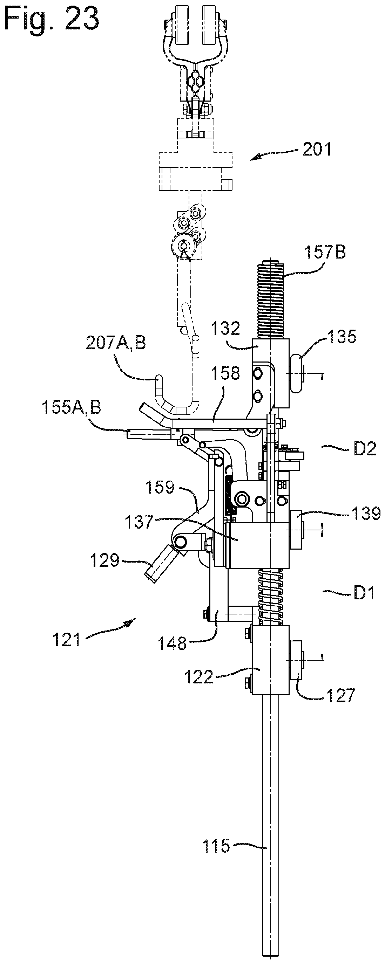

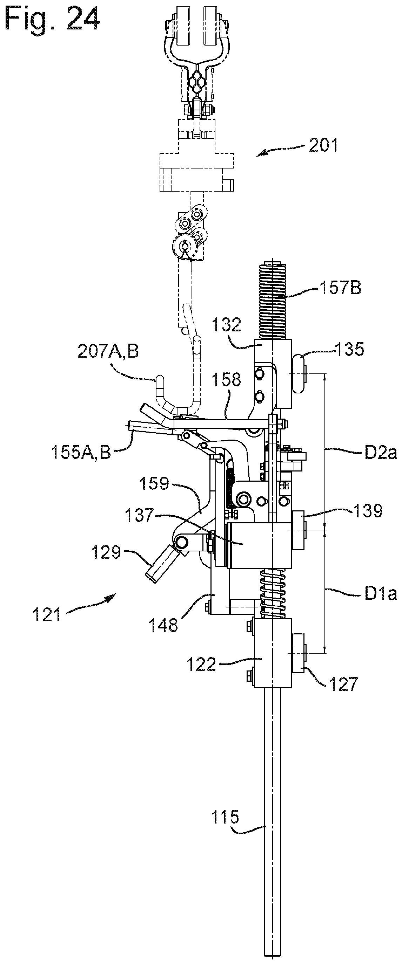

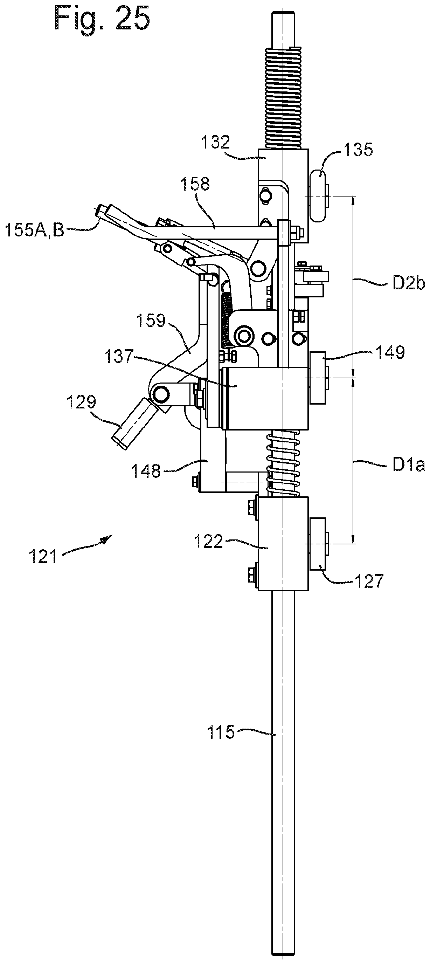

Figure 22 shows the cutting unit 121 in position with respect to shackle 201 shown in dotted lines. The shackle 201 is suspended from an overhead conveyor and is of a conventional type having a pair of downwardly depending hooks 207A,207B. Each of the hooks carries a leg part of chicken by its hock knuckle. Both legs are from the same chicken and hang downwardly with the thigh bones lowermost as in the embodiment of Figures 1-15. Operation of the unit 121 will now be explained in reference to the side elevations of Figures 23, 24 and 25. Figure 23 shows the start position of the unit ready to receive a pair of chicken legs between the relevant opposite guide assembly 156 and cutting knife 151A and between cutting knife 151B and opposite guide assembly 158. The left and right hand knife assemblies 143,145 are then in the position shown in Figure 20. As shown in Figure 23 the guide roller 139 of the main slide body 137, the follower wheel 127 of the secondary slide body 122, and the further follower wheel 135 of the knife adjuster slide body 132 are all engaged in their respective guide tracks (119,123,133 as shown in Figure 16), which are here deleted for clarity. In the start position shown in Figure 23 each of the follower wheel 127 and the further follower wheel 135 are at a maximum distance D1 and D2 respectively from the guide roller 139 of the main slide body 137. In Figure 24 the cutting unit 121 is shown in an initially position for starting a straight cut. In this initial cutting position the follower wheel 127 has moved to a minimum distance D1a with respect to the guide roller 139 of the main slide body 137. At this minimum distance D1a the levers 146,148 (only the latter visible in Figure 24) outwardly rotate the left and right hand knife assemblies 143,145 about their pivot shafts 147A,149A. This causes the outwardly directed cutting knifes 151A, 151B to penetrate the meat that surrounds the drumstick bone of a chicken leg just short of its hock knuckle. The distance D2a of the further follower wheel 135 with respect to the guide roller 139 of the main slide body 137 in Figure 24 is just starting to decrease from its maximum distance as shown in Figure 23. This is apparent from the knife adjuster levers 155A, 155B just assuming an inclined position. In Figure 25 the final J-cut position is shown with the distance between the further follower wheel 135 having become minimal with respect to the guide roller 139 of the main slide body 137. This minimal distance is indicated in Figure 25 as D2b. The distance between the follower wheel 127 of the secondary slide body 122 and the guide roller 139 remains at the minimum distance D1a. In the cutting position of Figure 25 the knife adjuster levers 155A,155B are at their maximum inclined position and thereby the cutting knifes 151A, 151B are oriented to cut the meat that surrounds the thigh bone after passage of the knee joint. The position of the thigh bone can be further controlled outwardly by positioner roller 129 in the same manner as described for the first embodiment.

Accordingly a device (incision station with carousels 1, 9; 109) is described for making a preparatory incision longitudinally of an animal extremity part (chicken leg L) having a first bone and a second bone articulated by a joint, and surrounded by meat. The device (1, 9; 109) includes an elongate linear guide member (pairs of parallel shafts 15; 115), a cutting unit (21; 121) associated with the elongate linear guide member for translating movement lengthwise thereof. The cutting unit (21; 121) includes a cutting knife (51; 151A, 151B) mounted for movement between a first position and a second position in a first plane. A conveyor (overhead conveyor with suspended hooks and/or shackles 5, 7; 201, 207A, B) is arranged for transporting animal extremity parts (L) through a path coincident with the cutting unit (21; 121). The device (1, 9; 109) further includes a primary drive mechanism (guide tracks and rollers 19, 39; 119, 139) for moving the cutting unit (21; 121) lengthwise of the elongate linear guide member (15; 115). The device (1, 9; 109) also includes a secondary drive mechanism (guide track and follower wheels 23, 27; 123, 127) for moving the cutting knife (51; 151A, 151B) between the first position for receiving an animal extremity part (L) transported by the conveyor (5, 7; 201, 207A, B) in the cutting unit (21; 121), and the second position for performing the preparatory incision longitudinally of the animal extremity part received in the cutting unit. The cutting knife (51; 151A, 151B) having an adjustable cutting direction in a second plane perpendicular to the first plane, and the device (1, 9; 109) includes a knife adjustment drive mechanism (guide track, follower wheel and adjuster lever 33, 35, 55; 133, 135, 155A, B) for adjusting the cutting direction of the cutting knife in the second plane.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim. The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extend that structure, material, or acts are considered to be essential they are inexpressively indicated as such. Additions, deletions, and modifications within the purview of the skilled person may generally be made without departing from the scope of the invention, as determined by the claims.

## Claims

1. Device for making a preparatory incision longitudinally of an animal extremity part having a first bone and a second bone articulated by a joint, and surrounded by meat, the device including:
at least one elongate linear guide member (15, 115);
at least one cutting unit (21, 121) associated with the at least one elongate linear guide member (15, 115) for translating movement lengthwise thereof;
a cutting knife (51, 151A, 151B) on the at least one cutting unit mounted for movement between a first position and a second position in a first plane, wherein the cutting knife is further mounted for having an adjustable cutting direction in a second plane perpendicular to the first plane, and further including a knife adjustment drive mechanism for adjusting the cutting direction of the cutting knife in the second plane;
a conveyor (5, 201) for transporting animal extremity parts through a path coincident with the at least one cutting unit;
a primary drive mechanism (19, 39, 119, 139) for moving the at least one cutting unit lengthwise of the at least one elongate linear guide member;
a secondary drive mechanism (23, 27, 123, 127) for moving the cutting knife between the first position for receiving an animal extremity part transported by the conveyor in the at least one cutting unit, and the second position for performing the preparatory incision longitudinally of an animal extremity part received in the at least one cutting unit,
wherein the at least one elongate linear guide member, and the associated at least one cutting unit are part of a plurality of elongate linear guide members, and a plurality of associated cutting units forming a periphery of a rotatable carousel (9, 109), wherein the rotatable carousel (9, 109) surrounds a stationary primary guide track that engages with each of the cutting units to form the primary drive mechanism, and wherein the secondary drive mechanism is formed by a stationary secondary guide track (19, 119) associated with the periphery of the rotatable carousel, and a follower wheel (39, 139) being kept in a lifted position by the secondary guide track, and wherein the knife adjustment drive mechanism comprises a stationary knife adjustment guide track (33, 133) surrounded by the rotatable carousel adapted to cooperate with a further follower wheel (35, 135) acting on the adjustable cutting knife via a knife adjuster lever.

2. Device according to one of claim 1 wherein the cutting unit further includes an animal part positioner, and a positioner drive mechanism for moving the animal part positioner between predefined positions.

3. Device according to one of claim 1 or 2, wherein the at least one cutting unit and the at least one elongate linear guide member are arranged for movement in synchronization with the conveyor through a portion of the same path.

4. Device according to one of claims 1 to 3, wherein the at least one elongate linear guide member comprises a pair of parallel shafts (15, 115).

5. Device according to any one of claims 1-4, wherein the conveyor extends about at least a portion of the periphery of the rotatable carousel (9, 109), wherein the conveyor includes a plurality of carriers (7, 207A, 207B) for holding at least one animal extremity part, and wherein the carriers coincide with the cutting units in the portion of the conveyor path coincident with the periphery of the rotatable carousel.

6. Device according to any one of claims 1-5, wherein at least one of the primary guide track, the secondary guide track, and the knife adjuster guide track is arranged on a stationary drum (17, 117) surface positioned inside the carousel.

7. Meat processing equipment including the device of one of claims 1 to 6.

8. Method of automatically making a preparatory incision longitudinally of a slaughtered animal extremity part with a first and a second bone articulated by a joint, using the device of one of claims 1 to 6.

## Patentansprüche

1. Vorrichtung zum Vornehmen eines vorbereitenden Einschnitts in Längsrichtung eines Extremitätenteils eines Tieres mit einem ersten Knochen und einem zweiten Knochen, die über ein Gelenk verbunden sind und von Fleisch umgeben sind, wobei die Vorrichtung Folgendes beinhaltet:
wenigstens ein langgestrecktes lineares Führungselement (15, 115);
wenigstens eine Schneideeinheit (21, 121), die mit dem wenigstens einen langgestreckten linearen Führungselement (15, 115) zur translatorischen Bewegung längs von diesem assoziiert ist;
ein Schneidmesser (51, 151A, 151B) an der wenigstens einen Schneideeinheit, das zur Bewegung zwischen einer ersten Position und einer zweiten Position in einer ersten Ebene montiert ist, wobei das Schneidmesser ferner zum Aufweisen einer justierbaren Schneidrichtung in einer zweiten Ebene senkrecht zu der ersten Ebene montiert ist, und ferner einen Messerjustierungsantriebsmechanismus zum Justieren der Schneidrichtung des Schneidmessers in der zweiten Ebene beinhaltend;
ein Fördergerät (5, 201) zum Transportieren von Extremitätenteilen von Tieren entlang einer Bahn, die mit der wenigstens einen Schneideeinheit zusammentrifft;
einen primären Antriebsmechanismus (19, 39, 119, 139) zum Bewegen der wenigstens einen Schneideeinheit längs des wenigstens einen langgestreckten linearen Führungselements;
einen sekundären Antriebsmechanismus (23, 27, 123, 127) zum Bewegen des Schneidmessers zwischen der ersten Position zum Aufnehmen eines Extremitätenteils eines Tieres, der von dem Fördergerät in der wenigstens einen Schneideeinheit transportiert wird, und der zweiten Position zum Ausführen des vorbereitenden Einschnitts in Längsrichtung eines Extremitätenteils eines Tieres, der in der wenigstens einen Schneideeinheit aufgenommen ist,
wobei das wenigstens eine langgestreckte lineare Führungselement und die damit assoziierte wenigstens eine Schneideeinheit Teil einer Mehrzahl von langgestreckten linearen Führungselementen und einer Mehrzahl von damit assoziierten Schneideeinheiten sind, die einen Umfang eines drehbaren Karussells (9, 109) bilden, wobei das drehbare Karussell (9, 109) einen stationären primären Führungsweg umgibt, der mit jeder der Schneideeinheiten in Eingriff steht, um den primären Antriebsmechanismus zu bilden, und wobei der sekundäre Antriebsmechanismus durch einen stationären sekundären Führungsweg (19, 119), der mit dem Umfang des drehbaren Karussells assoziiert ist, und einem Mitnehmerrad (39, 139), das durch den sekundären Führungsweg in einer angehobenen Position gehalten wird, gebildet ist,und wobei der Messerjustierungsantriebsmechanismus einen stationären Messerjustierungsführungsweg (33, 133) umfasst, der von dem drehbaren Karussell umgeben ist, dafür eingerichtet, mit einem weiteren Mitnehmerrad (35, 135) zusammenzuwirken, das über einen Messerjustiererhebel auf das justierbare Schneidmesser einwirkt.

2. Vorrichtung nach Anspruch 1, wobei die Schneideeinheit ferner einen Positionierer für Teile von Tieren und einen Positioniererantriebsmechanismus zum Bewegen des Positionierers für Teile von Tieren zwischen vordefinierten Positionen beinhaltet.

3. Vorrichtung nach Anspruch 1 oder 2, wobei die wenigstens eine Schneideeinheit und das wenigstens eine langgestreckte lineare Führungselement zur Bewegung synchron mit dem Fördergerät über einen Abschnitt der gleichen Bahn angeordnet sind.

4. Vorrichtung nach einem der Ansprüche 1 bis 3, wobei das wenigstens eine langgestreckte lineare Führungselement ein Paar paralleler Wellen (15, 115) umfasst.

5. Vorrichtung nach einem der Ansprüche 1 bis 4, wobei sich das Fördergerät um mindestens einen Abschnitt des Umfangs des drehbaren Karussells (9, 109) erstreckt, wobei das Fördergerät eine Mehrzahl von Trägern (7, 207A, 207B) zum Halten wenigstens eines Extremitätenteils eines Tieres beinhaltet, und wobei die Träger mit den Schneideeinheiten in dem Abschnitt der Bahn des Fördergeräts zusammentreffen, der mit dem Umfang des drehbaren Karussells zusammentrifft.

6. Vorrichtung nach einem der Ansprüche 1 bis 5, wobei wenigstens einer von dem primären Führungsweg, dem sekundären Führungsweg und dem Messerjustierungsführungsweg auf einer stationären Trommel (17, 117) angeordnet ist, mit der Oberfläche im Inneren des Karussells positioniert.

7. Fleischverarbeitungseinrichtung, die Vorrichtung nach einem der Ansprüche 1 bis 6 beinhaltend.

8. Verfahren zum automatischen Vornehmen eines vorbereitenden Einschnitts in Längsrichtung eines Extremitätenteils eines geschlachteten Tieres mit einem ersten Knochen und einem zweiten Knochen, die über ein Gelenk verbunden sind, unter Verwendung der Vorrichtung nach einem der Ansprüche 1 bis 6.

## Revendications

1. Dispositif pour pratiquer une incision préparatoire dans le sens de la longueur d'une partie d'extrémité d'animal ayant un premier os et un second os articulés par une articulation, et entourés par de la chair, le dispositif comprenant :
au moins un élément de guidage linéaire allongé (15, 115) ;
au moins une unité de coupe (21, 121) associée avec le au moins un élément de guidage linéaire allongé (15, 115) pour son mouvement de translation dans le sens de la longueur ;
une lame de coupe (51, 151A, 151B) sur la au moins une unité de coupe montée pour le déplacement entre une première position et une seconde position dans un premier plan, la lame de coupe étant en outre montée pour avoir une direction de coupe ajustable dans un second plan perpendiculaire au premier plan, et comprenant en outre un mécanisme d'entraînement d'ajustement de lame pour ajuster la direction de coupe de la lame de coupe dans le second plan ;
un transporteur (5, 201) pour transporter les parties d'extrémité d'animal sur une trajectoire qui coïncide avec la au moins une unité de coupe ;
un mécanisme d'entraînement principal (19, 39, 119, 139) pour déplacer la au moins une unité de coupe dans le sens de la longueur du au moins un élément de guidage linéaire allongé ;
un mécanisme d'entraînement secondaire (23, 27, 123, 127) pour déplacer la lame de coupe entre la première position pour recevoir une partie d'extrémité d'animal transportée par le transporteur dans la au moins une unité de coupe, et la seconde position pour réaliser l'incision préparatoire dans le sens de la longueur d'une partie d'extrémité d'animal reçue dans la au moins une unité de coupe,
dans lequel le au moins un élément de guidage linéaire allongé, et la au moins une unité de coupe associée font partie d'une pluralité d'éléments de guidage linéaires allongés, et une pluralité d'unités de coupe associées formant une périphérie d'un carrousel rotatif (9, 109), dans lequel le carrousel rotatif (9, 109) entoure un rail de guidage principal fixe qui se met en prise avec chacune des unités de coupe afin de former le mécanisme d'entraînement principal, et dans lequel le mécanisme d'entraînement secondaire est formé par un rail de guidage secondaire fixe (19, 119) associé avec la périphérie du carrousel rotatif, et une roue subordonnée (39, 139) qui est maintenue dans une position levée par le rail de guidage secondaire, et dans lequel le mécanisme d'entraînement d'ajustement de lame comprend un rail de guidage d'ajustement de lame fixe (33, 133) entouré par le carrousel rotatif adapté pour coopérer avec une autre roue subordonnée (35, 135) agissant sur la lame de coupe ajustable via un levier de dispositif d'ajustement de lame.

2. Dispositif selon la revendication 1, dans lequel l'unité de coupe comprend en outre un dispositif de positionnement de partie d'animal, et un mécanisme d'entraînement de dispositif de positionnement pour déplacer le dispositif de positionnement de partie d'animal entre les positions prédéfinies.

3. Dispositif selon la revendication 1 ou 2, dans lequel la au moins une unité de coupe et le au moins un élément de guidage linéaire allongé sont agencés pour le déplacement en synchronisation avec le transporteur sur une partie de la même trajectoire.

4. Dispositif selon l'une des revendications 1 à 3, dans lequel le au moins un élément de guidage linéaire allongé comprend une paire d'arbres parallèles (15, 115).

5. Dispositif selon l'une quelconque des revendications 1 à 4, dans lequel le transporteur s'étend autour d'au moins une partie de la périphérie du carrousel rotatif (9, 109), dans lequel le transporteur comprend une pluralité de supports (7, 207A, 207B) pour maintenir au moins une partie d'extrémité d'animal, et dans lequel les supports coïncident avec les unités de coupe dans la partie de la trajectoire de transporteur qui coïncide avec la périphérie du carrousel rotatif.

6. Dispositif selon l'une quelconque des revendications 1 à 5, dans lequel au moins l'un parmi le rail de guidage principal, le rail de guidage secondaire et le rail de guidage de dispositif d'ajustement de lame est agencé sur une surface de tambour fixe (17, 117) positionnée à l'intérieur du carrousel.

7. Equipement de traitement de viande comprenant le dispositif selon l'une des revendications 1 à 6.

8. Procédé pour pratiquer automatiquement une incision préparatoire dans le sens de la longueur d'une partie d'extrémité d'animal abattu avec un premier et un second os articulés par une articulation, à l'aide du dispositif selon l'une des revendications 1 à 6.
